# EUROPÄISCHE PATENTSCHRIFT

(11) **EP 1 335 469 B1**
(45) Veröffentlichungstag und Bekanntmachung des Hinweises auf die Patenterteilung: **22.08.2007**
(21) Anmeldenummer: 02405106.2
(22) Anmeldetag: 12.02.2002
(51) Int. Cl.: H02H 7/26

(54) **Empfang von Schutzbefehlen in einem Fernauslösegerät**
Receiving protection signals in a remotely controlled breaker
Réception de signaux de protection dans un télérupteur

(43) Veröffentlichungstag der Anmeldung: 13.08.2003
(73) Patentinhaber: ABB Schweiz AG, 5400 Baden (CH)
(72) Erfinder: Strittmatter, Michael, 5330 Zurzach (CH)
(74) Vertreter: ABB Patent Attorneys

(56) Entgegenhaltungen:
- US-A- 4 203 142

## Beschreibung

### Technisches Gebiet

Die Erfindung bezieht sich auf das Gebiet der Schutztechnik für Hoch- und Mittelspannungsnetze. Sie bezieht sich auf Verfahren zum Empfang von Schutzbefehlen in einem Fernauslösegerät sowie ein Fernauslösegerät gemäss dem Oberbegriff der Patentansprüche 1 und 8 (siehe US-A-4203142).

### Stand der Technik

Fernauslösegeräte oder Schutzsignalübertragungsgeräte dienen zur Übertragung von Schutz- oder Schaltbefehlen für einen Distanzschutz in elektrischen Hoch- und Mittelspannungsnetzen sowie -anlagen. Schutzbefehle bewirken beispielsweise eine direkte oder indirekte Öffnung eines Schutzschalters und dadurch eine elektrische Abtrennung eines Teiles des Netzes oder der Anlage. Andere Schutzbefehle bewirken umgekehrt eine Blockierung der Öffnung eines Schutzschalters. Schutzbefehle müssen beispielsweise von einem Abschnitt einer Hochspannungsleitung zu einem anderen übertragen werden. Dazu erzeugt ein Sender in einem Fernauslösegerät entsprechend den Schutzbefehlen analoge Signale, die über eine Signalverbindung übertragen werden. Ein Empfänger in einem anderen Fernauslösegerät detektiert die übertragenen Signale und bestimmt die entsprechende Anzahl und Art der Schutzbefehle.

Die analogen Signale liegen beispielsweise in einem Frequenzbereich zwischen 0-4 kHz. Sie werden entweder direkt in diesem Frequenzbereich übertragen, oder auf eine Trägerfrequenz moduliert und vor dem Empfänger demoduliert, oder über einen digitalen Kanal übertragen und vor dem Empfänger rekonstruiert. In jedem Fall liegt am Empfänger ein analoges, Empfangssignal an, bei dem ein Vorhandensein von einzelnen Signalen unterschiedlicher Frequenz detektiert werden muss.

Abhängig von der Art des Schutzbefehls werden dabei unterschiedliche Anforderungen an die Signalübertragung und -detektion gestellt, die durch Übertragungszeit und Bandbreite sowie durch folgende Parameter charakterisierbar sind:
- Puc: Sicherheitswert, d.h. Wahrscheinlichkeit, dass ein Befehl aufgrund von Störungen auf dem Übertragungsweg fälschlicherweise empfangen wird, obwohl er gar nicht gesendet wurde. Ein niedriger Wert von Puc entspricht einer hohen Sicherheit der Übertragung.
- Pmc: Verlässlichkeitswert, d.h. Wahrscheinlichkeit, dass ein Befehl, der gesendet wurde, nicht empfangen wird. Ein niedriger Wert von Pmc entspricht einer hohen Verlässlichkeit der Übertragung.

Störungen der Übertragung dürfen im Ruhefall keine Befehle vortäuschen und andererseits im Befehlsfall einen echten Befehl nicht unzulässig verzögern oder sogar zu dessen Verlust führen. Grosse Sicherheit und grosse Verlässlichkeit bei gleichzeitig kurzer Übertragungszeit und kleiner Bandbreite sind widersprüchliche Forderungen. Es kann aber immer eine Grösse auf Kosten der anderen Eigenschaften verbessert werden. Der Kompromiss ist durch die Anwendung gegeben. So erfordern beispielsweise indirekt auslösende Schutzsysteme kurze Übertragungszeiten bei grosser Verlässlichkeit und mässiger Sicherheit. Anwendungen mit direkter Schalterauslösung hingegen verlangen eine sehr grosse Sicherheit und Verlässlichkeit bei geringeren Anforderungen an die Übertragungszeit.

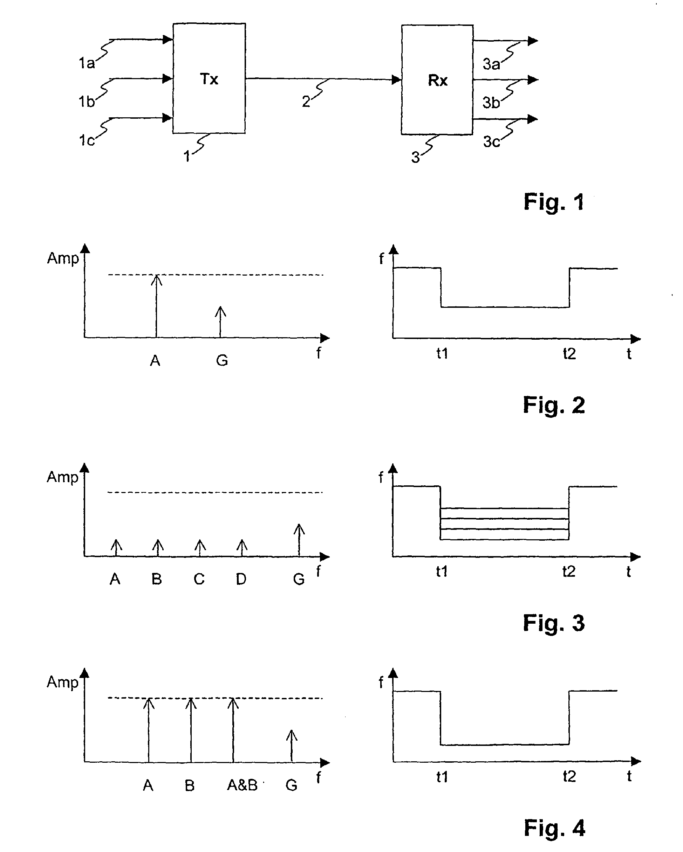

Figur 1 zeigt schematisch eine Übertragung von Schutzbefehlen zwischen Fernauslösegeräten: Ein Sender 1 weist mehrere Befehlseingänge 1a,1b,1c als Eingänge für binäre Schutzbefehle A,B,C auf. Der Sender 1 erzeugt entsprechend den Schutzbefehlen analoge Signale, die über die Signalverbindung 2 übertragen werden. Ein Empfänger 3 empfängt die übertragenen Signale, rekonstruiert die entsprechenden Werte der Schutzbefehle und gibt diese über Befehlsausgänge 3a,3b,3c aus. Die Signale, welche Schutzbefehle codieren, werden zusammenfassend auch als Befehlssignale bezeichnet, im Gegensatz zu einem Guardsignal oder Ruhesignal, wie im folgenden erläutert wird:

Figur 2 zeigt ein Ruhesignal und ein Befehlssignal im Frequenzbereich und im Zeitbereich für eine Übertragung eines einzigen Signals bei einer ersten Frequenz, welches einem zu übertragenden Schutzbefehl entspricht. Eine Amplitudenachse der Darstellung ist mit Amp bezeichnet, eine Frequenzachse mit f und eine Zeitachse mit t. In einem Ruhefall, dass heisst, wenn kein Schutzbefehl übertragen werden muss, wird bei einer zweiten Frequenz kontinuierlich ein Ruhesignal oder Guardsignal G gesendet. Der Empfänger 3 detektiert das Vorhandensein respektive die Abwesenheit des Befehlssignals A und des Ruhesignals G fortwährend und erzeugt bei ungenügender Signalqualität oder falls beide zusammen oder keines der beiden empfangen wird, ein Alarmsignal. Im Befehlsfall unterbricht das sendende Fernauslösegerät das Ruhesignal und sendet ein Befehlssignal aus. In Figur 1 geschieht dies zwischen den Zeitpunkten t1 und t2. Das Befehlssignal kann mit höherem Pegel als das Ruhesignal G ausgesendet werden, in der Regel mit einer maximal verfügbaren Ausgangsleistung. Erkennt der Empfänger das fehlende Ruhesignal G und gleichzeitig ein gültiges Befehlssignal mit genügender Signalqualität, so gilt der Befehl als erkannt, das heisst als echt.

Figur 3 zeigt eine Übertragung mehrerer Schutzbefehle unter Verwendung von einem Befehlssignal pro Schutzbefehl. Es wird für jeden Befehl A,B,C,D ein eigenes Eintonsignal mit eigener Frequenz verwendet. Sollen mehrere Befehle gleichzeitig übertragen werden, wird die vorhandene Sendeleistung auf die entsprechenden Eintonsignale aufgeteilt. Die Figur 3 zeigt eine simultane Übermittlung von 4 Schutzbefehlen, wobei also jedem der entsprechenden Befehlssignale nur ein Viertel der gestrichelt eingezeichneten maximalen Signalamplitude zur Verfügung steht. Es sind zwar Empfängereigenschaften bezüglich Übertragungszeit, Sicherheit und Verlässlichkeit individuell für jeden Schutzbefehl einstellbar, jedoch ist ein Störabstand drastisch schlechter gegenüber der Übermittlung nur eines Befehlssignals.

Figur 4 zeigt eine Übertragung mittels genau eines Befehlssignals pro Schutzbefehl A,B und auch für die Schutzbefehlskombination A&B. Im Befehlsfall steht die maximale Sendeleistung jeweils einer einzelnen Frequenz zur Verfügung, um einen möglichst grossen Störabstand im Empfänger zu erhalten. Jedoch werden für jeden zusätzlich zu übertragenden Schutzbefehl C und dessen mögliche Kombinationen mit den übrigen Schutzbefehlen A&C, B&C, A&B&C Bandbreite und weitere Detektoren benötigt.

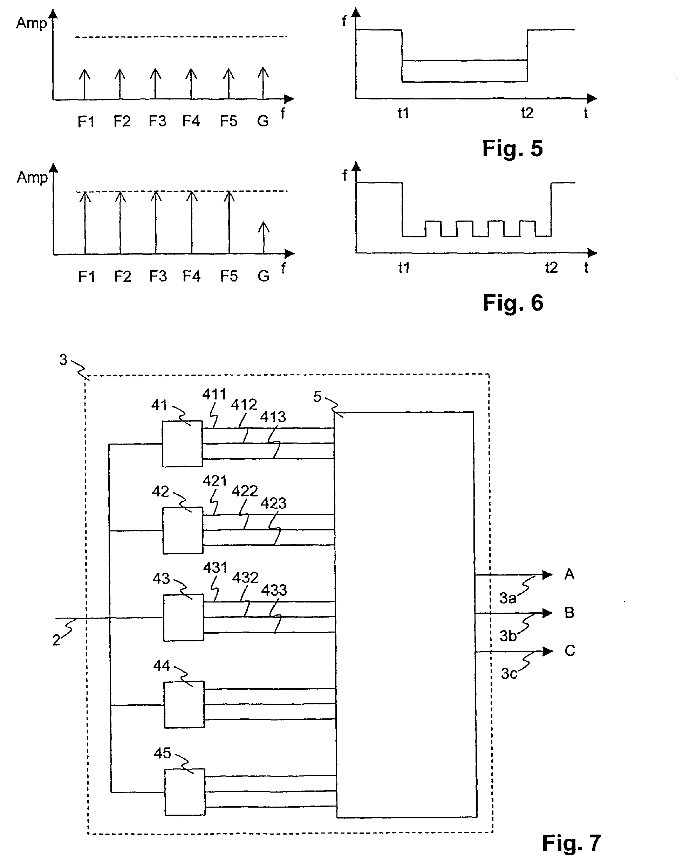

Figur 5 zeigt eine Übertragung mittels einer Kombination von Befehlssignalen pro Schutzbefehl und pro Schutzbefehlskombination. Es werden zur Übertragung eines oder mehrerer Schutzbefehle Kombinationen der Befehlssignale mit unterschiedlichen Frequenzen F1 bis F5 ausgesendet. Beispielsweise werden Zweitonsignale mit je halber Signalamplitude ausgesendet. Mit jeder dieser Frequenzkombination wird ein einzelner Schutzbefehl oder eine bestimmte Kombination von Schutzbefehlen dargestellt respektive codiert.

Die Verfahren gemäss Figur 4 und 5 weisen den Vorzug auf, dass sie immer mit ausreichend grossem Geräuschabstand arbeiten können. Es ist ihnen jedoch auch gemeinsam, dass keine Möglichkeit besteht, unterschiedliche Sicherheitsanforderungen von Schutzbefehlen zu berücksichtigen, die als Befehlskombination übertragen wurden. Das Vorhandensein einer Befehlskombination muss beispielsweise immer mit der Sicherheit desjenigen Einzelbefehls mit der höchsten Sicherheitsanforderung ausgewertet werden. Da eine hohe Sicherheit eine längere Detektionszeit bedingt, werden andere Einzelbefehle der Befehlskombination, die eine niedrigere Sicherheitsanforderung aufweisen aber dafür schneller übertragen werden sollten, unnötig verzögert.

### Darstellung der Erfindung

Es ist deshalb Aufgabe der Erfindung, ein Verfahren zum Empfang von Schutzbefehlen in einem Fernauslösegerät und ein Fernauslösegerät der eingangs genannten Art zu schaffen, welche eine Übermittlung von Schutzbefehlen auch als Befehlskombinationen erlaubt und trotzdem eine individuelle Auswertung entsprechend unterschiedlicher Anforderungen an Sicherheit und Dauer der Befehlsdetektion erlauben.

Diese Aufgabe lösen ein Verfahren zum Empfang von Schutzbefehlen in einem Fernauslösegerät und ein Fernauslösegerät mit den Merkmalen der Patentansprüche 1 und 8.

Im erfindungsgemässen Verfahren zum Empfang von Schutzbefehlen in einem Fernauslösegerät ist jedem Signal ein Detektor zugeordnet, welcher ein Vorhandensein des Signals nach Massgabe von mindestens zwei vorgebbaren, unterschiedlichen Sicherheitschwellwerten detektiert, und wird ein Schutzbefehl mit einem zugeordneten Mindestsicherheitswert detektiert,
- falls ein einzelnes Signal, welches den Schutzbefehl einzeln oder in Kombination mit anderen Schutzbefehlen codiert, mit einem Sicherheitsschwellwert detektiert wird, der grösser oder gleich dem dem Schutzbefehl zugeordneten Mindestsicherheitswert ist, oder
- falls alle Signale einer Kombination von Signalen, welche den Schutzbefehl einzeln oder in Kombination mit anderen Schutzbefehlen codiert, mit jeweils einem Sicherheitsschwellwert detektiert werden, der grösser oder gleich dem dem Schutzbefehl zugeordneten Mindestsicherheitswert ist.

Dadurch wird es möglich, dass beim Empfang eines einzelnen Signals oder einer Kombination von Signalen, welche mehrere Schutzbefehle codieren, einzelne dieser mehreren Schutzbefehle entsprechend unterschiedlichen Mindestsicherheitswerten detektiert werden.

In einer bevorzugten Ausführungsform des Erfindungsgegenstandes werden in den Detektoren der Signale anstelle von unterschiedlichen Sicherheitswerten unterschiedliche Übertragungs- respektive Detektionszeiten verwendet. In einer weiteren bevorzugten Ausführungsform der Erfindung geschieht die Detektion nach Massgabe von sowohl unterschiedlichen Sicherheitswerten als auch von unterschiedlichen Übertragungszeiten. Somit kann ein Schutzbefehl immer optimal zum vorgesehenen Anwendungsfall übertragen werden, d.h. die Parameter Sicherheit, Verlässlichkeit und Übertragungszeit sind individuell für den Schutzbefehl konfigurierbar.

Das erfindungsgemässe Fernauslösegerät weist Mittel zur Durchführung des erfindungsgemässen Verfahrens auf.

Weitere bevorzugte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: schematisch eine Übertragung von Schutzbefehlen zwischen Fernauslösegeräten ;
- Figuren 2 bis 6: Ruhesignale und Befehlssignale im Frequenzbereich und im Zeitbereich; und zwar
- Figur 2: für eine Übertragung eines einzigen Befehlssignals;
- Figur 3: für eine Übertragung mittels jeweils eines Befehlssignals pro Schutzbefehl;
- Figur 4: für eine Übertragung mittels jeweils eines Befehlssignals pro Schutzbefehl und pro Schutzbefehlskombination;
- Figur 5: für eine Übertragung mittels einer Kombination von Befehlssignalen pro Schutzbefehl und pro Schutzbefehlskombination;
- Figur 6: für eine Übertragung mittels alternierender Eintonsignale; und
- Figur 7: ein Signalflussbild für einen Empfänger gemäss der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

Figur 5 zeigt eine Übertragung mittels einer Kombination von Befehlssignalen pro Schutzbefehl und pro Schutzbefehlskombination. Es werden zur Übertragung eines oder mehrerer Schutzbefehle Kombinationen der Befehlssignale mit unterschiedlichen Frequenzen F1 bis F5 ausgesendet. Befehlssignale werden im folgenden auch Signale genannt. Beispielsweise werden Zweitonsignale mit je halber Signalamplitude ausgesendet. Bei einer Anzahl n von zur Verfügung stehenden Signalen existieren n*(n-1)/2 Kombinationsmöglichkeiten von zwei Signalen. Mit jeder dieser Kombination von Signalen wird ein einzelner Schutzbefehl oder eine bestimmte Kombination von Schutzbefehlen dargestellt respektive codiert. Die Kombinationsmöglichkeiten der Anzahl Schutzbefehle m errechnet sich dabei wie folgt: 2^{m}-1. Um alle Schutzbefehle mit den vorhandenen Signalen übertragen zu können, gilt: 2^{m}-1 <= n*(n-1)/2. Beispielsweise geschieht die Kombination gemäss der folgenden Tabelle. Dabei sind in der ersten Spalte alle möglichen einzeln und in Kombination auftretenden Schutzbefehle angegeben. In den übrigen Spalten ist angegeben, welche zwei von insgesamt fünf Signalen zur Codierung eines einzelnen Schutzbefehls respektive einer Kombination von Schutzbefehlen verwendet werden. Jedes der Signale ist eine im wesentliche sinusförmige Schwingung mit einer Frequenz F1, F2, ... F5.

| zu übertragende Schutzbefehle | übermittelte Signale respektive Frequenzen | | | | |
|---|---|---|---|---|---|
| | F1 | F2 | F3 | F4 | F5 |
| A | X | X | | | |
| B | | X | X | | |
| C | | | X | X | |
| A&B | X | | X | | |
| B&C | | X | | X | |
| A&C | | | X | | X |
| A&B&C | X | | | X | |

Figur 7 zeigt ein Signalflussbild für einen Empfänger gemäss der Erfindung. Damit wird nun beispielsweise beim Empfang der Befehlskombination A&C die Detektion des Schutzbefehls A - die mit geringerer Sicherheit aber dafür möglichst schnell geschehen sollte - nicht bis zur sicheren Detektion des Schutzbefehls C verzögert. Dies geschieht in folgender Weise: Der Empfänger 3 weist für jedes Signal respektive jede Signalfrequenz einen zugeordneten Signaldetektor 41...45 auf. Wirkungsprinzipien solcher Eintondetektoren sind allgemein bekannt, zwei davon werden im Folgenden angegeben:

In einer ersten Ausführungsform der Erfindung besteht ein solcher Eintondetektor 41...45 aus einem Bandpass mit einer Durchlassfrequenz entsprechend dem zu detektierenden Signal, gefolgt von einem Gleichrichter zur Ermittlung einer Enveloppe des bandpassgefilterten Signals. Der Ausgang des Gleichrichters wird tiefpassgefiltert und in einem Komparator mit einem Schwellwert verglichen. Durch den Ausgang des Komparators wird bei ausreichender Amplitude des bandpassgefilterten Signals die Detektion eines Signals angezeigt. Die Übertragungszeit oder Ansprechzeit des Detektors ist gleich der Inversen der Bandbreite des Bandpassfilters.

In einer anderen Ausführungsform eines Eintondetektors 41...45 wird das empfangene Signal während eines Zeitfensters konstanter Länge in einem ersten Korrelator mit einem Referenzsignal mit der Frequenz des zu detektierenden Signals korreliert, und in einem zweiten Korrelator mit dem um 90° phasenverschobenen Referenzsignal. Ausgangssignale der beiden Korrelatoren werden quadriert und zu einem Summensignal addiert. Dieses Summensignal entspricht einem phasenunabhängigen Anteil des zu detektierenden Signals am empfangenen Signal, also einer asynchronen Demodulation. Das Summensignal wird in einem Komparator mit einem Schwellwert verglichen. Durch den Ausgang des Komparators wird bei ausreichender Amplitude des Summensignals die Detektion eines Signals angezeigt. Die Übertragungszeit oder Signalauswertezeit des Detektors ist gleich der Länge des Zeitfensters der beiden Korrelatoren.

In beiden oben beschriebenen Ausführungsformen entspricht das mit dem Schwellwert verglichene Signal einem Mass für die Sicherheit, mit der das detektierte Signal tatsächlich vorliegt respektive durch den Sender 1 gesendet wurde. Dieses Mass für die Sicherheit wird im Folgenden kurz als Sicherheitswert bezeichnet. Überschreitet bei den Signaldetektoren 41,42,43 der jeweilige Sicherheitswert einen ersten Schwellwert L, so wird dies an ersten Detektorausgängen 411,421,431 angezeigt. Überschreitet der jeweilige Sicherheitswert einen zweiten, höheren Schwellwert M, so wird dies an zweiten Detektorausgängen 412,422,432 angezeigt. Überschreitet der jeweilige Sicherheitswert einen dritten, noch höheren Schwellwert H, so wird dies an dritten Detektorausgängen 413,423,433 angezeigt. In einer Verknüpfungslogik 5 werden aus den Werten der Detektorausgänge Werte von Befehlsausgänge 3a,3b,3c gebildet, welche gegebenenfalls eine Detektion der Schutzbefehle A,B,C signalisieren.

Da jeder Detektor mehrere Ausgänge entsprechend unterschiedlicher Sicherheitsschwellwerte aufweist, kann auch die Detektion eines Schutzbefehls, der in einer Kombination mit anderen Schutzbefehlen und durch eine Kombination von Signalen übermittelt wurde, selektiv entsprechend der für den Schutzbefehl geforderten Sicherheit geschehen. Dies geschieht beispielsweise entsprechend der folgenden Tabelle. Im Hinblick auf die Erfindung ist in der ersten Spalte auch angegeben, dass für den Schutzbefehl A ein niedriger Mindestsicherheitswert L der Übertragung respektive des Empfangs vorgegeben ist, für den Schutzbefehl B ein mittlerer M und für den Schutzbefehl C ein hoher Mindestsicherheitswert H.

| zu übertragende Schutzbefehle | 1. Det (F1) | | | 2. Det (F2) | | | 3. Det (F3) | | | 4. Det (F4) | | | 5. Det (F5) | | |
|---|---|---|---|---|---|---|---|---|---|---|---|---|---|---|---|
| | L | M | H | L | M | H | L | M | H | L | M | H | L | M H | |
| A (L) | A | | | A | | | | | | | | | | | |
| B (M) | | | | | B | | | B | | | | | | | |
| C (H) | | | | | | | | | C | | | C | | | |
| A&B | A | B | | | | | A | B | | | | | | | |
| B&C | | | | | B | C | | | | | B | C | | | |
| A&C | | | | | | | A | | C | | | | A | | C |
| A&B&C | A | B | C | | | | | | | A | B | C | | | |

Die Tabelle ist wie folgt zu lesen: Der Schutzbefehl A alleine wird durch je ein Signal mit der Frequenz F1 und eines mit Frequenz F2 codiert. Da für A nur ein niedriger Mindestsicherheitswert erforderlich ist, wird A bereits detektiert und über den Befehlsausgang 3a ausgegeben, wenn sowohl beim ersten Detektor 41 für die Frequenz F1 als auch beim zweiten Detektor 42 für die Frequenz F2 das entsprechende Signal mit einer Sicherheit detektiert wird, die höher als der erste (niedrigste) Schwellwert L ist.

Der Schutzbefehl A in Kombination mit dem Schutzbefehl B wird durch je ein Signal mit der Frequenz F1 und eines mit Frequenz F3 codiert. Das Vorhandensein von A wird detektiert und ausgegeben sobald sowohl beim ersten Detektor 41 als auch beim dritten Detektor 43 für die Frequenz F3 das entsprechende Signal mit einer Sicherheit detektiert wird, die höher als der *erste* Schwellwert L ist. Das Vorhandensein von B hingegen wird erst detektiert, wenn sowohl beim ersten Detektor 41 als auch beim dritten Detektor 43 das entsprechende Signal mit einer Sicherheit detektiert wird, die höher als der *zweite* Schwellwert M ist.

Die kombinierte Übermittlung aller Schutzbefehle miteinander (A&B&C) führt dazu, dass beim zunehmender Sicherheit des Ansprechens sowohl des ersten Detektors 41 als auch des vierten Detektors 44 zuerst A, dann B und zuletzt C als detektiert gelten.

Die Vorschriften für die Detektion der übrigen Schutzbefehle und ihrer Kombinationen ergeben sich in analoger Weise aus der Tabelle. Die Tabelle definiert somit die Verknüpfungslogik 5. Beispielsweise gilt der Schutzbefehl C als detektiert, wenn der dritte und der vierte, oder der zweite und der vierte, oder der dritte und der fünfte, oder der erste und der vierte Detektor jeweils mit der höchsten Sicherheit H ansprechen.

Wird beispielsweise auch für den Schutzbefehl B eine hohe Sicherheit H gefordert, dann ist die Tabelle wie folgt:

| zu übertragende Schutzbefehle | 1. Det (F1) | | | 2. Det (F2) | | | 3. Det (F3) | | | 4. Det (F4) | | | 5. Det (F5) | | |
|---|---|---|---|---|---|---|---|---|---|---|---|---|---|---|---|
| | L | M | H | L | M | H | L | M | H | L | M | H | L | M | H |
| A (L) | A | | | A | | | | | | | | | | | |
| B (M) | | | | | | B | | | B | | | | | | |
| C (H) | | | | | | | | | C | | | C | | | |
| A&B | A | | B | | | | A | B | | | | | | | |
| B&C | | | | | | B,C | | | | | | B,C | | | |
| A&C | | | | | | | A | | C | | | | A | | C |
| A&B&C | A | | B,C | | | | | | | A | | B,C | | | |

Das erfindungsgemässe Verfahren ist in analoger Weise auf Konfigurationen mit nur zwei oder mit mehr als drei Sicherheitsschwellwerten anzuwenden, ebenso beim Vorhandensein von weniger oder mehr als drei Schutzbefehlen.

Die Erfindung wird in einer anderen bevorzugten Ausführungsform in Kombination mit einer Codierung wie in Figur 4 verwendet. Es wird also bei einem Eintonsignal, welches eine Kombination von Schutzbefehlen codiert, das Vorhandensein einzelner dieser Schutzbefehle entsprechend unterschiedlicher Sicherheitsschwellwerten detektiert.

Figur 6 zeigt eine Übertragung mittels alternierender Eintonsignale, welche in einer weiteren bevorzugten Ausführungsform der Erfindung verwendet wird. Ein einzelner Schutzbefehl oder eine Kombination von Schutzbefehlen wird dabei durch alternierende Eintonsignale codiert. Beispielsweise wird für den Schutzbefehl A zwischen F1 und F2 periodisch umgeschaltet, für die Kombination A&B zwischen F1 und F3. Im Sinne der bisher verwendeten Terminologie wird ein solches Signal mit periodisch wechselnden Frequenzen als "Signal" betrachtet, welches durch einen geeigneten Detektor mit mehreren Sicherheitsschwellwerten detektiert wird. Die Bildung der Werte der Befehlsausgänge 3a,3b,3c entsprechend den Detektorausgängen 411,412,413,421,422,.... erfolgt wie bereits beschrieben. In einer weiteren Ausführungsform der Detektierung alternierender Eintonsignale werden Eintonsignale jeweils mit eigenen Detektoren detektiert und werden die Umschaltungen zwischen den zwei Eintonsignalen in einer entsprechend erweiterten Verknüpfungslogik 5 verarbeitet.

Die Elemente des Empfängers 3, welche den Signalfluss gemäss Figur 7 realisieren, werden vorzugsweise durch eine entsprechend programmierte Datenverarbeitungseinheit oder anwendungsspezifische integrierte Schaltungen (ASICs, FPGAs) realisiert. Sie sind aber auch durch analoge Bauelemente und/oder in Kombination mit diskreten Logikelementen und/oder programmierten Schaltkreisen implementierbar. In einer bevorzugten Ausführungsform der Erfindung ist der Empfänger 3 mittels eines entsprechend programmierten digitalen Signalprozessors implementiert.

Ein Computerprogramm zum Empfang von Schutzbefehlen in einem Fernauslösegerät gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt ein computerlesbares Medium auf, auf welchem die Computerprogrammcodemittel gespeichert sind.

### Bezugszeichenliste

- Amp: Amplitude
- f: Frequenz
- t: Zeitachse
- A,B,C,D: Schutzbefehle
- G: Guardsignal, Ruhesignal
- 1: Sender
- 1a,1b,1c: Befehlseingänge
- 2: Signalverbindung
- 3: Empfänger
- 3a,3b,3c: Befehlsausgänge
- 41,42,43,44,45: Signaldetektoren
- 411,421,431: erste Detektorausgänge
- 412,422,432: zweite Detektorausgänge
- 41 3,423,433: dritte Detektorausgänge
- 5: Verknüpfungslogik

## Patentansprüche

1. Verfahren zum Empfang von Schutzbefehlen in einem Fernauslösegerät, bei welchem
• ein oder mehrere Signale empfangen werden,
• Schutzbefehle und Kombinationen von Schutzbefehlen durch ein einzelnes Signal oder durch eine vorgegebene Kombination von Signalen codiert werden, und
• jedem Schutzbefehl ein vorgegebener Mindestsicherheitswert zugeordnet ist,
**dadurch gekennzeichnet,**
**dass** jedem Signal ein Detektor (41,42,43,44,45) zugeordnet ist, welcher ein Vorhandensein des Signals nach Massgabe von mindestens zwei vorgebbaren, unterschiedlichen Sicherheitsschwellwerten detektiert, und dass ein Schutzbefehl detektiert wird,
• falls ein einzelnes Signal, welches den Schutzbefehl einzeln oder in Kombination mit anderen Schutzbefehlen codiert, mit einem Sicherheitsschwellwert detektiert wird, der grösser oder gleich dem dem Schutzbefehl zugeordneten Mindestsicherheitswert ist, oder
• falls alle Signale der Kombination von Signalen, welche den Schutzbefehl einzeln oder in Kombination mit anderen Schutzbefehlen codiert, mit jeweils einem Sicherheitsschwellwert detektiert werden, der grösser oder gleich dem dem Schutzbefehl zugeordneten Mindestsicherheitswert ist.

2. Verfahren gemäss Anspruch 1, **dadurch gekennzeichnet, dass** jedes der Signale durch eine Schwingung mit vorgegebener Frequenz gebildet wird.

3. Verfahren gemäss Anspruch 1, **dadurch gekennzeichnet, dass** jeder Schutzbefehl und jede Kombination von Schutzbefehlen durch genau ein Signal codiert wird.

4. Verfahren gemäss Anspruch 1, **dadurch gekennzeichnet, dass** jeder Schutzbefehl und jede Kombination von Schutzbefehlen durch genau zwei Signale codiert wird.

5. Verfahren gemäss Anspruch 1, **dadurch gekennzeichnet, dass** jedes der Signale durch eine Schwingung, welche periodisch zwischen zwei vorgegebenen Frequenzen umschaltet, gebildet wird.

6. Verfahren gemäss Anspruch 1, **dadurch gekennzeichnet, dass** anstelle von Sicherheitswerten für die Detektion der Signale respektive Schutzbefehle Werte für eine Übertragungszeit der Signale respektive Schutzbefehle verwendet werden.

7. Verfahren gemäss Anspruch 1, **dadurch gekennzeichnet, dass** sowohl Sicherheitswerten für die Detektion der Signale respektive Schutzbefehle als auch Werte für eine Übertragungszeit der Signale respektive Schutzbefehle verwendet werden.

8. Fernauslösegerät, aufweisend Mittel zum Empfang von einem oder mehreren Signalen, wobei Schutzbefehle und Kombinationen von Schutzbefehlen durch ein einzelnes Signal oder durch eine vorgegebene Kombination von Signalen codiert sind und jedem Schutzbefehl ein vorgegebener Mindestsicherheitswert zugeordnet ist, **dadurch gekennzeichnet,**
**dass** das Fernauslösegerät mindestens einen Detektor (41,42,43,44,45) aufweist, wobei jedem Signal ein Detektor (41,42,43,44,45) zur Detektion eines Vorhandensein des Signals nach Massgabe von mindestens zwei vorgebbaren, unterschiedlichen Sicherheitsschwellwerten zugeordnet ist, und
**dass** das Fernauslösegerät ein Mittel (5) zur Detektion eines Vorhandenseins eines Schutzbefehls aufweist,
• falls ein einzelnes Signal, welches den Schutzbefehl einzeln oder in Kombination mit anderen Schutzbefehlen codiert, mit einem Sicherheitsschwellwert detektiert ist, der grösser oder gleich dem dem Schutzbefehl zugeordneten Mindestsicherheitswert ist, oder
• falls alle Signale der Kombination von Signalen, welche den Schutzbefehl einzeln oder in Kombination mit anderen Schutzbefehlen codiert, mit jeweils einem Sicherheitsschwellwert detektiert sind, der grösser oder gleich dem dem Schutzbefehl zugeordneten Mindestsicherheitswert ist.

## Claims

1. A method for the reception of protective commands in a remote triggering device, in which
• one or a plurality of signals are received,
• protective commands and combinations of protective commands are coded by means of an individual signal or by means of a prescribed combination of signals, and
• a prescribed minimum security value is assigned to each protective command,
**characterised in that** a detector (41,42,43,44,45) is assigned to each signal, which detects a presence of the signal according to at least two prescribable, differing security thresholds, and
**in that** a protective command is detected,
• if an individual signal that encodes the protective command individually, or in combination with other protective commands, this is detected with a security threshold value that is greater than or equal to the minimum security value assigned to the protective command, or
• if all signals of the combination of signals that encodes the protective command individually or in combination with other protective commands, each is detected with a security threshold value that is greater than or equal to the minimum security value assigned to the protective command.

2. The method according to Claim 1, **characterised in that** each of the signals is formed by means of an oscillation with a prescribed frequency.

3. The method according to Claim 1, **characterised in that** each protective command and each combination of protective commands is coded by means of exactly one signal.

4. The method according to Claim 1, **characterised in that** each protective command and each combination of protective commands is coded by means of exactly two signals.

5. The method according to Claim 1, **characterised in that** each of the signals is formed by means of an oscillation that periodically switches between two prescribed frequencies.

6. The method according to Claim 1, **characterised in that** instead of security values for the detection of the signals, i.e. protective commands, values for a transfer time of the signals, i.e. protective commands, are used.

7. The method according to Claim 1, **characterised in that** both security values for the detection of the signals, i.e. protective commands, and also values for a transfer time of the signals, i.e. protective commands, are used.

8. A remote triggering device, having means for the reception of one or a plurality of signals, wherein protective commands and combinations of protective commands are coded by means of an individual signal or by means of a prescribed combination of signals, and a prescribed minimum security value is assigned to each protective command,
**characterised in that** the remote triggering device has at least one detector (41,42,43,44,45), wherein a detector (41,42,43,44,45) is assigned to each signal, for the detection of a presence of the signal according to at least two prescribable, differing security thresholds, and
**in that** the remote triggering device has a means (5) for the detection of a presence of a protective command,
• if an individual signal that encodes the protective command individually, or in combination with other protective commands, this is detected with a security threshold value that is greater than or equal to the minimum security value assigned to the protective command, or
• if all signals of the combination of signals that encodes the protective command individually or in combination with other protective commands, each is detected with a security threshold value that is greater than or equal to the minimum security value assigned to the protective command.

## Revendications

1. Procédé de réception de signaux de protection dans un télérupteur, dans lequel
• Un ou plusieurs signaux sont reçus,
• Des signaux de protection et des combinaisons de signaux de protection sont codées par un signal individuel ou par une combinaison prescrite de signaux, et
• Une valeur de sécurité minimale prescrite est coordonnée à chaque signal de protection,
**caractérisé en ce que**,
un détecteur (41,42,43,44,45) est coordonné à chaque signal, lequel détecte une présence du signal selon au moins deux valeurs seuils de sécurité différentes, prédéterminées et **en ce que** un signal de protection est détecté,
• Dans le cas d'un signal individuel, qui code individuellement le signal de protection ou en combinaison avec d'autres signaux de protection, celui-ci est détecté avec une valeur seuil de sécurité, qui est plus grande ou égale à la valeur de sécurité minimale coordonnée au signal de protection, ou
• Dans le cas de tous les signaux de la combinaison de signaux, qui codent individuellement le signal de protection ou en combinaison avec d'autres signaux de protection, ceux-ci sont détectés avec une valeur seuil de sécurité respective, qui est plus grande ou égale à la valeur de sécurité minimale coordonnée au signal de protection.

2. Procédé selon la revendication 1, **caractérisé en ce que** chacun des signaux est formé par une oscillation avec une fréquence prescrite.

3. Procédé selon la revendication 1, **caractérisé en ce que** chaque signal de protection et chaque combinaison de signaux de protection est codé(e) par exactement un signal.

4. Procédé selon la revendication 1, **caractérisé en ce que** chaque signal de protection et chaque combinaison de signaux de protection est codé(e) par exactement deux signaux.

5. Procédé selon la revendication 1, **caractérisé en ce que** chacun des signaux est formé par une oscillation, qui commute périodiquement entre deux fréquences prescrites.

6. Procédé selon la revendication 1, **caractérisé en ce que**, au lieu des valeurs de sécurité pour la détection des signaux de protection respectifs des signaux, des valeurs pour un temps de transmission des signaux de protection respectifs des signaux sont utilisées.

7. Procédé selon la revendication 1, **caractérisé en ce que** tant les valeurs de sécurité pour la détection des signaux de protection respectif des signaux que les valeurs pour un temps de transmission des signaux de protection respectifs des signaux sont utilisées.

8. Télérupteur, présentant des moyens de réception d'un ou plusieurs signaux, moyennant quoi des signaux de protection et des combinaisons de signaux de protection sont codés par un signal individuel ou par une combinaison prescrite de signaux et une valeur de sécurité minimale prescrite est coordonnée à chaque signal de protection, **caractérisé en ce que**
le télérupteur présente au moins un détecteur (41,42,43,44,45à), moyennant quoi à chaque signal est coordonné un détecteur (41,42,43,44,45) pour détecter une présence du signal selon au moins deux valeurs seuils de sécurité différentes, prédéterminées, et
**en ce que** le télérupteur présente des moyens (5) pour détecter une présence d'un signal de protection,
• Dans le cas d'un signal individuel, qui code individuellement le signal de protection ou en combinaison avec d'autres signaux de protection, celui-ci est détecté avec une valeur seuil de sécurité, qui est plus grande ou égale à la valeur de sécurité minimale coordonnée au signal de protection, ou
• Dans le cas de tous les signaux de la combinaison de signaux, qui codent individuellement le signal de protection ou en combinaison avec d'autres signaux de protection, ceux-ci sont détectés avec une valeur seuil de sécurité respective, qui est plus grande ou égale à la valeur de sécurité minimale coordonnée au signal de protection.
